# EUROPEAN PATENT APPLICATION

(11) **EP 4 838 116 A1**
(43) Date of publication of application: **11.11.2026**
(21) Application number: 26176207.4
(22) Date of filing: 04.05.2026
(51) Int. Cl.: F16H 59/04, F16H 61/24, F16H 61/02

(54) **METHOD AND SYSTEM FOR CONTROLLING THE TRANSMISSION IN A VEHICLE**

(30) Priority: 06.05.2025 IT 202500010050
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

Motor vehicle (1) with control system (100) of a transmission system (5) with automatic transmission having a gearbox tower (6) and a clutch pedal (7); the control system (100) comprising a control unit (13) configured to adjust the activation of the clutch pedal (7) and the gearbox tower (6), depending on the instantaneous operating conditions of the transmission system (5).

## Description

### CROSS-REFERENCE TO RELATED APPLICATIONS

This patent application claims priority from Italian patent application no. 102025000010050 filed on May 6, 2025, the entire disclosure of which is incorporated herein by reference.

### FIELD OF THE ART

The invention concerns a method and a system for controlling the transmission in a vehicle, in particular a motor vehicle with automatic transmission.

### PRIOR ART

It is well known that a motor vehicle comprises an automatic transmission. Different types of automatic transmissions are also known, such as the dual-clutch transmission (DCT) or the robotized transmission.

In general, a car with automatic transmission comprises steering wheel controls. For example, a car with automatic transmission comprises a lever or paddle on the steering wheel to allow the driver to control the engagement of forward or reverse gear or the release of the clutch. In the case of sequential transmission, the vehicle with automatic transmission also comprises an additional paddle on the steering wheel to allow the driver to control the engagement of a certain gear ratio.

Generally speaking, compared to a vehicle with a manual transmission, a vehicle with an automatic transmission lacks: the clutch pedal; the gearbox tower with the driver's grip lever; rigid levers or cables to transmit the controls from the gearbox tower to the transmission system; and the hydraulic system to connect the clutch pedal with the transmission system.

Also in view of the substantial number of absent components, the architecture of a vehicle with an automatic transmission is considerably different from the architecture of a vehicle with a manual transmission. In particular, the architecture of a vehicle with an automatic transmission cannot be easily converted to install a manual transmission. However, some drivers express a preference for driving cars with a manual transmission or that provide the sensation of using a manual transmission.

### DISCLOSURE OF THE INVENTION

The aim of the present invention is to provide a control system that can be installed on vehicle architectures with automatic transmissions, comprising the control components typical of a manual transmission.

According to the present invention, a method and a control system is provided according to the appended claims.

The dependent claims define particular embodiments of the invention.

### BRIEF DESCRIPTION OF THE DRAWINGS

In the following, embodiments of the invention are described for a better understanding thereof by way of non-limiting examples and with reference to the accompanying drawings, in which:
- Figure 1 is a schematic view, with some parts removed for clarity, of a motor vehicle according to the present invention;

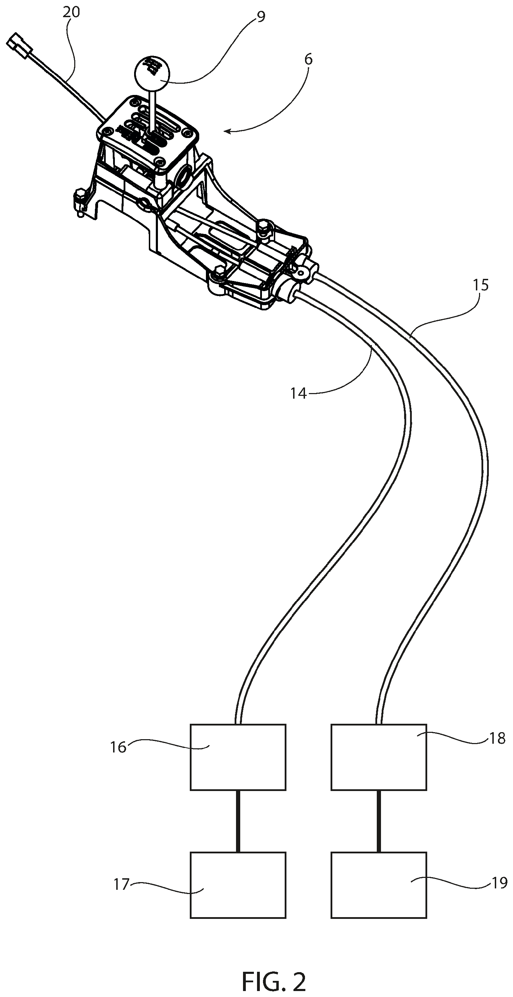

- Figure 2 illustrates, schematically and with some parts removed for clarity, a detail of Figure 1;

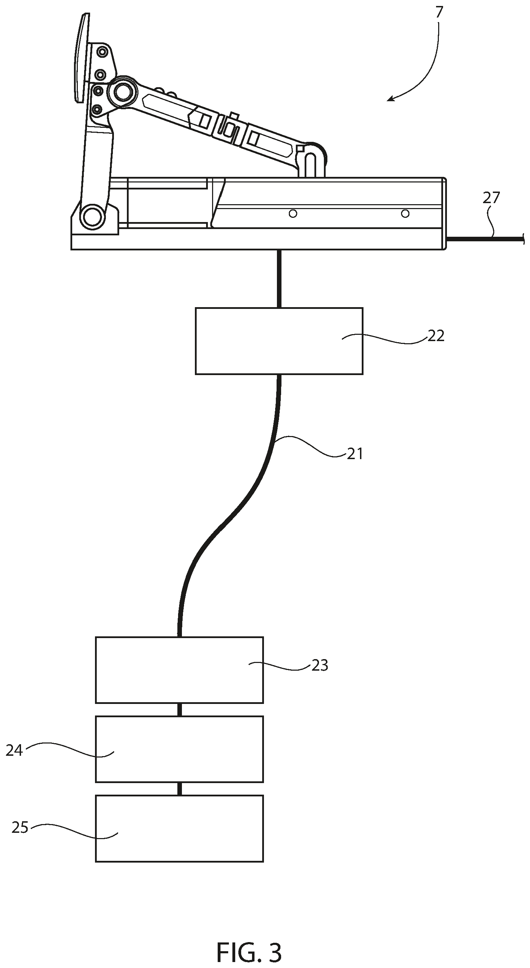

- Figure 3 illustrates, schematically and with some parts removed for clarity, a further detail of Figure 1;
- Figure 4 illustrates, schematically and with some parts removed for clarity, a control system according to the present invention.

### EMBODIMENTS OF THE INVENTION

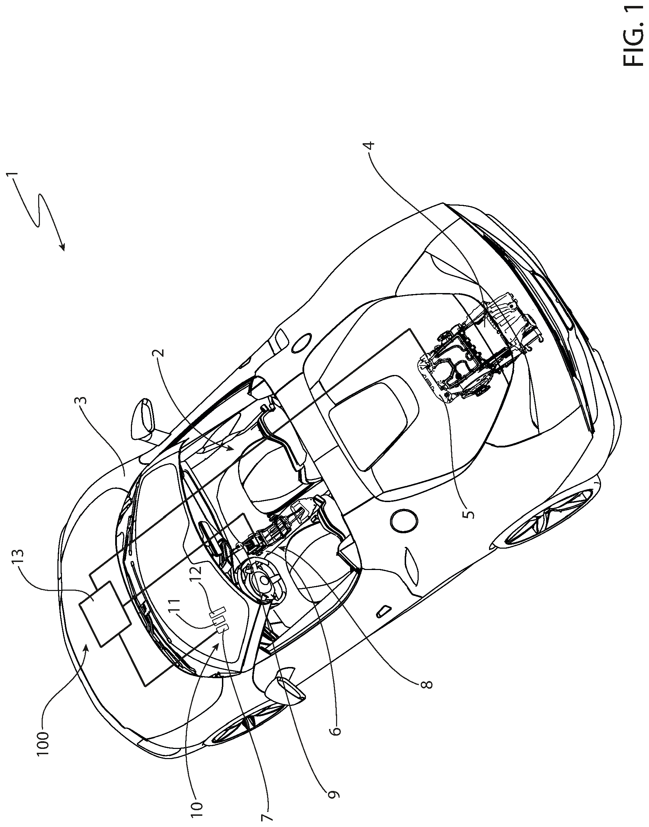

In Figure 1, the reference number 1 is used to indicate, as a whole, a motor vehicle comprising, in a known manner: a load-bearing structure (e.g. a body and/or chassis), which defines a passenger compartment 2 configured to accommodate at least one driver and, possibly, one or more passengers; and a bodywork 3, which externally covers the load-bearing structure.

The vehicle 1 comprises, in a known and schematically illustrated manner, an engine 4 and a transmission system 5. The transmission system 5 may comprise one or more clutches. By way of non-limiting example, the transmission system 5 is an automatic transmission of the dual clutch type (also generally known as DCT). The transmission system 5 is of a known type and is illustrated schematically. The transmission system 5 is variable; in other words, the transmission system 5 can be selected from a group of transmission systems that differ in type.

The vehicle 1 further comprises a control system 100 that is configured to convert commands provided by the driver into drive commands for the transmission system 5.

The control system 100 comprises a gearbox tower 6 and a clutch pedal 7.

According to the illustrated example, the gearbox tower 6 is arranged at the central tunnel 8 of the passenger compartment 2. The gearbox tower 6 comprises, in turn, a lever 9 configured to be gripped, in use, by the driver. The lever 9 is configured to be able to execute the following under the action of the driver: clutch activation commands (generally movements parallel to the longitudinal axis of the vehicle 1); and gear selection commands (generally perpendicular translations to the longitudinal axis of the vehicle 1).

The clutch pedal 7 is installed in a known way inside a pedal board 10 alongside the brake pedal 11 and the accelerator pedal 12. The clutch pedal 7 is configured to be pushed or released, in a manner known and illustrated schematically, by the driver's foot.

The control system 100 also comprises a control unit 13 that is connected to and configured to exchange signals with: the transmission system 5, the gearbox tower 6 and the clutch pedal 7.

According to the present invention, the gearbox tower 6 is not directly connected to the transmission system 5. In other words, the gearbox tower 6 is not mechanically connected, e.g. by rigid levers or cables, to the transmission system 5.

The gearbox tower 6 is of a known type and is illustrated schematically. The gearbox tower 6 can be selected from a group of towers differing in type. The gearbox tower 6 comprises a selector lever 14 and a clutch lever 15, which are connected, in a known and not illustrated manner, to the gear lever 9. In particular, the selector lever 14 is connected to the lever 9 (in a familiar manner and illustrated schematically) to transmit gear selection commands outside the tower 6. The clutch lever 15 is connected to the lever 9 (in a manner known and illustrated schematically) to transmit engagement commands outside the tower 6. The selector lever 14 and clutch lever 15 can be either rigid levers or cables, e.g. cables generally known as BOWDEN cables.

Advantageously, the gearbox tower 6 comprises a load cell 16 and an actuator 17 which are connected to the selector lever 14. The length of the selector lever 14 is shorter than the length of a selector lever of a manual transmission of the known type. The selector lever 14 can end in the vicinity of the gearbox tower 6. In other words, the selector lever 14 does not connect the gearbox tower 6 with the transmission system 5.

Advantageously, the gearbox tower 6 comprises a load cell 18 and an actuator 19 which are connected to the clutch lever 15. The length of the clutch lever 15 is shorter than the length of a clutch lever of a known manual transmission. The clutch lever 15 can end in the vicinity of the gearbox tower 6. In other words, the clutch lever 15 does not connect the gearbox tower 6 with the transmission system 5.

The control system 100 also comprises a wiring harness 20, which connects the gearbox tower 6 with the control unit 13.

According to the present invention, the clutch pedal 7 is not connected to the transmission system 5. In other words, the clutch pedal 7 is not hydraulically connected, e.g. via a pipe, to the transmission system 5.

The clutch pedal 7 is of a known type and illustrated schematically. The clutch pedal 7 can be selected from a group of different types of clutch pedals.

The clutch pedal 7 comprises a hydraulic tube 21. The length of the hydraulic tube 21 is shorter than a hydraulic tube of a conventional manual transmission and can end in the vicinity of the clutch pedal 7.

Advantageously, the hydraulic tube 21 is connected in series to: an inlet cylinder 22; an outlet cylinder 23; a load cell 24; and an actuator 25.

The inlet cylinder 22 and outlet cylinder 23 are of a known type and illustrated schematically. The inlet cylinder 22 and outlet cylinder 23 can be selected from a group of cylinders differing in type.

The control system 100 further comprises wiring 26, which connects the clutch pedal 7 to the control unit 13, and wiring 27, which connects the control unit 13 to the transmission system 5.

It is observed that the load cells 16, 18 and 24 are of a known type and illustrated schematically. The load cells 16, 18 and 24 can be selected from a group of load cells differing in type. The actuators 17, 19 and 25 are of a known type and illustrated schematically. The actuators 17, 19 and 25 can be selected from a group of actuators differing in type.

Advantageously, the control system 100 is configured to adjust the actuators 17, 19 and 25 according to the instantaneous operating conditions of the transmission system 5, so as to reproduce for the driver the same physical sensations as if driving a car with a conventional manual transmission.

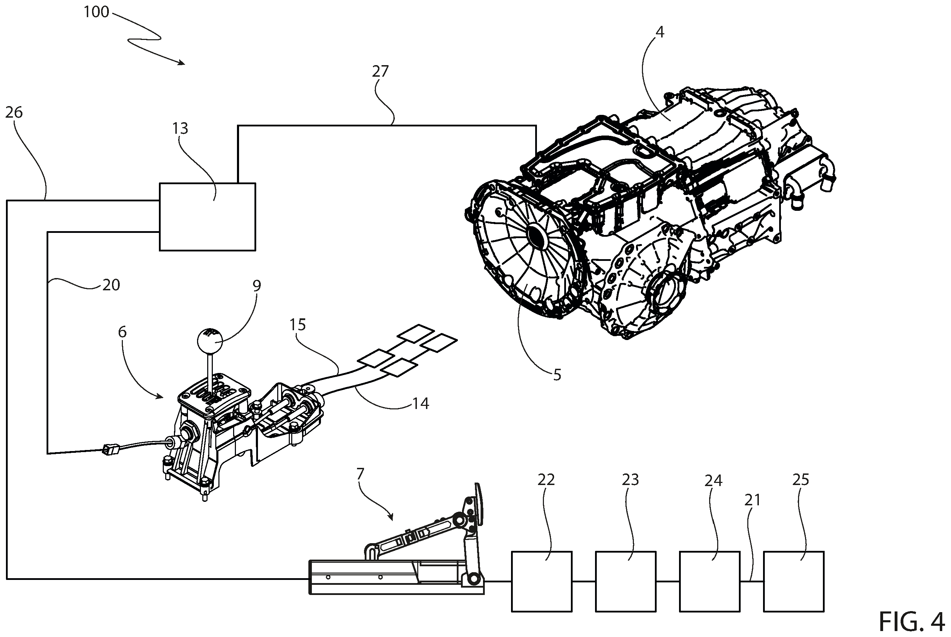

As shown in Figure 4, the control unit 13 is configured to exchange signals with the transmission system 5, load cells 16, 18 and 24 and actuators 17, 19 and 25. According to a variant not shown, the control unit 13 exchanges data wirelessly, i.e. in a wireless mode, with the load cells 16, 18 and 24 and/or actuators 17, 19 and 25 and/or the transmission system 5.

The control unit 13 comprises, in turn, a memory unit 28, a computing unit 29 and a management unit 30 for exchanging data outside the control unit 13, in particular with the driver, for example with a display and/or via the gear lever 9 and/or the clutch pedal 7.

The memory unit 28 is configured to contain association data between the response parameters r of the control system 100 and operating parameters f. For example, a plurality of tables relating the response parameters r to the operating parameters f are loaded into the memory unit 28. The computing unit 29 is configured to select suitable association data, depending on the data exchanged with the management unit 30.

Preferably, the response parameters r comprise:
- the activating parameters of the actuator 17 connected to the selector lever 14:
- the activating parameters of the actuator 19 connected to the clutch lever 15;
- the activating parameters of the actuator 25 connected to the tube 21.

Preferably the operating parameters f comprise:
- the activation commands given by the driver on the clutch pedal 7;
- the gear shift commands given by the driver on the gear lever 9;
- the gear selection commands given by the driver on the gear lever 9;
- the signals emitted by the load cell 16 connected to the selector lever 14;
- the signals emitted by the load cell 18 connected to the clutch lever 15;
- the signals emitted by the load cell 24 connected to the tube 21.

The computing unit 29 exchanges data with the memory unit 28 and the management unit 30.

Advantageously, the association data are tables, at least one for each actuator 17, 19 and 25, in which the relevant activating parameters are given based on parameters relating to the instantaneous operating conditions of the transmission system 5.

A method of controlling a transmission system 5 according to the present invention is described below.

In use, the driver presses the clutch pedal 7 with his/her foot to operate the clutch of the transmission system 5 (so as to disconnect or connect the engine 4 from the gearbox). The driver's action on the clutch pedal 7 causes a change in the pressure of the fluid contained within the tube 21. Simultaneously, the control unit 13 receives: from the transmission system 5 signals relating to the instantaneous operating conditions; and from the load cell 24 signals relating to the fluid pressure in the tube 21. Then, the computing unit 29 determines the relevant operating parameters f by means of the association data and exchanges them with the management unit 30. For example, the computing unit 29 determines the activation parameters of the actuator 25 connected to the tube 21 so as to impart a response (in terms of resisting forces) on the clutch pedal 7 by means of fluid pressure inside the tube 21, which gives the driver the same driving sensations as a manual transmission.

To change gears, the driver gives clutch and selection commands via the gear lever 9. In particular, the commands that the driver can give via the lever 9 concern the operation of the selector lever 14 and the clutch lever 15. The driver's action causes a change in tension on the selector lever 14 and/or the clutch lever 15. At the same time, the control unit 13 detects: from the transmission system 5 signals relating to the instantaneous operating conditions; and from the load cells 16 and 18 signals relating to the pull applied on the relevant selector lever 14 and clutch lever 15, respectively. Then, the computing unit 29 determines the relevant operating parameters f by means of the association data and exchanges them with the management unit 30. For example, the computing unit 29 determines the activation parameters of the actuator 17 connected to the selector lever 14 and/or the actuator 19 connected to the clutch lever 15, so as to impart a response (in terms of resisting forces) on the gear lever 9 by means of the tension of the selector lever 14 and the clutch lever 15, which gives the driver the same driving sensations as a manual transmission.

Advantageously, the solution of the type described above makes it possible to install on the architecture of a vehicle 1 with an automatic transmission, the gearbox tower 6 and clutch pedal 7 in such a way as to provide the driver with a transmission control system that provides the same driving sensations as a vehicle with a manual transmission.

## Claims

1. A method for controlling a transmission system (5), of a vehicle (1) with automatic transmission, by means of a control system (100) comprising a gearbox tower (6) and
a clutch pedal (7); wherein, the gearbox tower (6) comprises, in turn, a gear lever (9), a selector lever (14) and a clutch lever (15); wherein the selector lever (14) and the clutch lever (15) are connected to the gear lever (9); wherein, the gearbox tower (6) comprises a first load cell (16) and a first actuator (17) connected to the selector lever (14); wherein, the gearbox tower (6) comprises a second load cell (18) and a second actuator (19) connected to the clutch lever (15); wherein, the clutch pedal (7) communicates fluidically with a tube (21) containing a fluid; wherein, the clutch pedal (7) comprises a third load cell (24) and a third actuator (25) connected to said tube (21); the control system (100) comprising a control unit (13) configured to regulate the operation of said actuators (17; 19; 25) as function of the instantaneous operating conditions of the transmission system (5);
the method comprising the steps of
- - storing in a memory unit (28) association data between the operating parameters (f) of the transmission system (5) and response parameters (r) of said actuators (17; 19; 25);
- - acquiring at least one operating parameter (f);
- - determining the response parameters (r) as function of the operating parameters (f) and the association data.

2. A method according to claim 1, wherein the response parameters (r) comprise: the activating parameters of the first actuator (17) connected to the selector lever (14): the activating parameters of the second actuator (19) connected to the clutch lever (15); the activating parameters of the third actuator (25) connected to the tube (21), which communicates fluidically with the clutch pedal (7).

3. A method according to any preceding claim, wherein the operating parameters (f) comprise: the clutch activation commands given by the driver on the clutch pedal (7); the gear shift commands given by the driver on the gear lever (9); the gear selection commands given by the driver on the gear lever (9); the signals exchanged with the control unit (13) by the first load cell (16) connected to the selector lever (14); the signals exchanged with the control unit (13) by the second load cell (18) connected to the clutch lever (15); the signals exchanged with the control unit (13) by the third load cell (24) connected to said tube (21).

4. A method according to any preceding claim, wherein the clutch pedal (7), the selector lever (14), the clutch lever (15) communicate with the transmission system (5) through said control unit (13).

5. A vehicle with automatic transmission comprising a transmission system (5) and a control system (100) for said transmission system (5); wherein, the control system (100) comprises a gearbox tower (6) and a clutch pedal (7); wherein, the gearbox tower (6) comprises, in turn, a gear lever (9), a selector lever (14) and a clutch lever (15); wherein, the selector lever (14) and the clutch lever (15) are connected to the gear lever (9); wherein, the gearbox tower (6) comprises a first load cell (16) and a first actuator (17) connected to the selector lever (14); wherein, the gearbox tower (6) comprises a second load cell (18) and a second actuator (19) connected to the clutch lever (15); wherein, the clutch pedal (7) communicates fluidically with a tube (21) containing a fluid; wherein, the clutch pedal (7) comprises a third load cell (24) and a third actuator (25) connected to said tube (21); the control system (100) comprising a control unit (13) configured to regulate the activation of said actuators (17; 19; 25) as function of the instantaneous operating conditions of the transmission system (5).

6. A vehicle according to claim 5, wherein the clutch pedal (7), the selector lever (14), the clutch lever (15) communicate with the transmission system (5) by means of said control unit (13).

7. A vehicle according to claim 5 or 6, wherein said control unit (13) exchange signals with said load cells (16; 18; 24), said actuators (17; 19; 25) and the transmission system (5).

8. A vehicle according to any claim from 5 to 7, wherein the control unit (13) comprises a memory unit (28) a computing unit (29) and a management unit (30) configured to activate said actuators (17; 19; 25) so as to transmit to the driver, by means the gear lever (9) and/or the clutch pedal (7), determined resisting forces as function of the instantaneous operating conditions of the transmission system (5).

9. A vehicle according to claim 8, wherein the memory unit (28) is configured to contain association data between response parameters (r) of the control system (100) and operating parameters (f).

10. A vehicle according to claim 8 or 9, wherein the computing unit (29) is configured to select the appropriate association data, based on the data exchanged with the management unit (30).
